Europäisches Patentamt

**European Patent Office**

**Office européen des brevets**

(11) Numéro de publication: **0 359 639**
**A1**

# DEMANDE DE BREVET EUROPEEN

(21) Numéro de dépôt: **89402458.7**

(22) Date de dépôt: **08.09.89**

(51) Int. Cl.5: **A 21 B 5/02**

(30) Priorité: **09.09.88 FR 8811812**

(43) Date de publication de la demande:
**21.03.90 Bulletin 90/12**

(84) Etats contractants désignés:
**AT BE CH DE ES GB GR IT LI LU NL SE**

(71) Demandeur: **Le Moine, Paul**
**Kerohan B.P. 33**
**F-22580 Plouha (FR)**

**Le Moine, épouse Anquetil, Georgette**
**5, rue du Père Adam**
**F-76000 Rouen (FR)**

**Le Moine, épouse Le Blanc, Annie**
**31, rue Jules Ferry**
**F-76250 Deville les Rouen (FR)**

**Le Moine, Thierry**
**37, rue Jouvenet**
**F-76000 Rouen (FR)**

**Le Moine, Martine**
**10, rue du Père Adam**
**F-76000 Rouen (FR)**

(72) Inventeur: **Le Moine, Paul**
**Kerohan B.P. 33**
**F-22580 Plouha (FR)**

**Le Moine, épouse Anquetil, Georgette**
**5, rue du Père Adam**
**F-76000 Rouen (FR)**

**Le Moine, épouse Le Blanc, Annie**
**31, rue Jules Ferry**
**F-76250 Deville les Rouen (FR)**

**Le Moine, Thierry**
**37, rue Jouvenet**
**F-76000 Rouen (FR)**

**Le Moine, Martine**
**10, rue du Père Adam**
**F-76000 Rouen (FR)**

(74) Mandataire: **Wagret, Jean-Michel**
**23 rue de Léningrad**
**F-75008 Paris (FR)**

(54) **Dispositif pour la préparation, la cuisson et la délivrance instantanée et automatique de produits alimentaires.**

(57) Dispositif pour la préparation, la cuisson et la délivrance automatique et en temps réel d'un produit alimentaire façonné et préparé à partir d'une pâte soumise à cuisson rapide sur plaque, telle qu'une crêpe, galette, bliniss ou analogues, et le dispositif est caractérisé en ce qu'il comporte :
- une source (5) des ingrédients de base propres à constituer la pâte entrant dans la préparation du produit ; - des moyens de dosage (6) d'une quantité déterminée de pâtes correspondant à une unité de cuisson ;
- des moyens d'acheminement (10,11) de cette dose ;
- une enceinte (2) réceptrice de cette dose en vue de sa préparation et de son conditionnement physique ;
- une plaque de cuisson (14) pourvue de moyens de chauffage (15,15′) apte à recevoir ladite dose de pâte en position étalée sur ladite plaque ;
- des moyens de temporisation propres à régler le temps et l'intensité du chauffage affectant ladite plaque lors de la phase de cuisson ;
- des moyens d'acheminement (15) de la pâte en amont de ladite plaque et du produit alimentaire en aval de ladite plaque vers une zone de mise à la disposition du consommateur.

Fig.1

EP 0 359 639 A1

## Description

**Dispositif pour la préparation, la cuisson et la délivrance instantanée et automatique de produits alimentaires.**

La présente invention concerne un dispositif automatique fonctionnant sans intervention humaine et capable, sur une commande initiale de parcourir un cycle complet aboutissant à la délivrance automatique d'un produit alimentaire fraîchement cuit.

L'invention s'applique de façon plus particulière à la préparation et à la mise à disposition d'un produit alimentaire fraîchement cuit à partir d'une pâte telle que crêpe, galette, blinis ou analogue.

Et c'est en rapport avec cette application particulière que l'invention sera ci-après décrite, bien qu'elle ne soit pas limitée à ce domaine spécifique et qu'elle puisse trouver un terrain d'application pour divers produits alimentaires en fonction de recettes spécifiques, qui toutes passeront par le stade de la confection d'une pâte susceptible d'être acheminée automatiquement par une conduite appropriée jusqu'à des moyens de cuisson.

On connaît de nombreux dispositifs susceptibles de délivrer automatiquement des produits alimentaires, lesquels se présentent généralement sous la forme de préparations froides (par exemple sandwichs) qui peuvent être alors aisément stockés et mis à la disposition de l'acheteur par des procédés ou machines de distribution automatique, fonctionnant notamment par l'introduction d'une pièce de monnaie.

On connaît également des dispositifs plus élaborés dans lesquels le signal initial, correspondant à l'introduction d'une pièce, déclenche un processus de préparation qui est généralement limité au rechauffement d'un produit déjà préparé et subissant, à partir de son état sensiblement final, un cycle thermique limité pour en parachever la préparation et l'exaltation des qualités organoleptiques souhaitées ; ce qui est le cas par exemple de la prépara tion de produits du type croque-monsieur.

Il n'existe pas cependant de machines à fonctionnement automatique propre à assurer la confection des éléments de base et des produits intermédiaires puis d'acheminer les produits ainsi élaborés vers une phase de cuisson au terme de laquelle ils sont mis à la disposition des utilisateurs.

Or on sait que les qualités gustatives du produit alimentaire sont évidemment très supérieures lorsque le consommateur reçoit et a à sa disposition un produit alimentaire entièrement frais qui peut être absorbé immédiatement au sortir du cycle normal de sa préparation.

Ce qui n'est pas le cas des produits alimentaires stockés dans un état très proche de l'état final et qui subissent par conséquent pendant la période de stockage une altération tant sur le plan des qualités bactériologiques que sur le plan simplement gustatif.

On comprend en effet que tout produit alimentaire notamment à base de farine ou de produits pulvérulents, à moins d'être largement déshydratés, ce qui est le cas par exemple des biscuits ou biscottes, comporte nécessairement un pourcentage d'eau qui peut atteindre et dépasser 30 à 35% dans le cas de tranches de pain utilisées pour des sandwichs ou croque-monsieur ; ce pourcentage d'eau dans un milieu riche, à température ambiante, déclenche un processus d'oxydation d'une part et surtout de prolifération des bactéries qui entraînent rapidement une dégradation des qualités gustatives du produit suivies d'une décomposition progressive.

C'est pourquoi la faveur du public s'oriente vers des produits frais et fabriqués sur place par un personnel de service.

Mais la préparation sur place par un personnel en permanence ne peut se concevoir dans des conditions rentables que pendant une période limitée du cycle diurne, correspondant à une rotation rapide des clients et à un débit important des produits alimentaires consommés ; de sorte que pendant les périodes creuses ou chaque fois que la densité de consommateurs n'est pas suffisante, l'implantation d'un point de fabrication devient dépourvue de rentabilité.

De plus le maintien d'un personnel de service affecté à la fabrication et à la vente en permanence, ralentit (par la nécessité de cumuler les deux opérations de fabrication et de vente) et grève le prix de revient des produits ainsi mis à la disposition des consommateurs ; alors que le prix des matières premières elles-mêmes ne représente qu'une infime partie du prix de vente final lequel est essentiellement constitué par la rémunération du personnel.

Il existe donc un besoin évident pour un dispositif qui cumulerait à la fois les avantages de la fabrication d'un produit frais, c'est-à-dire mis à la disposition du consommateur à l'état chaud et sortant de la cuisson, avec toutes les qualités organoleptiques recherchées, et en même temps les avantages de commodité, de simplicité, d'économie de prix de revient et de souplesse de mise en place d'une machine automatique.

Et l'invention vise à répondre à cet impératif et selon un premier objet, le dispositif de l'invention permettra de mettre en place, dans des conditions parfaitement rentables et dans des locaux présentant une fréquentation irrégulière cyclique ou non, un point de vente automatique de produits qui seront cependant offerts au public à l'état frais et au sortir de la cuisson, avec toutes les propriétés gustatives qui sont souhaitées par un tel produit.

De sorte que le dispositif selon l'invention permet de mettre à la disposition du consommateur un produit alimentaire solide, frais et chaud, et qui pourra être obtenu aussi simplement que le sont aujourd'hui les tasses de café, thé ou boissons chaudes ou encore boissons froides dans les distributeurs automatiques.

L'appareil selon l'invention pouvant d'ailleurs être couplé à un distributeur de boisson notamment chaude en offrant ainsi au consommateur une collation complète voire un mini repas.

A cet effet l'invention concerne un dispositif pour la préparation, la cuisson et la délivrance automatique et en temps réel d'un produit alimentaire façonné et prépare à partir d'une pâte soumise à cuisson rapide sur plaque, telle qu'une crêpe, galette, bliniss ou analogues, et le dispositif est caractérisé en ce qu'il comporte :

- une source des ingrédients de base propres à constituer la pâte entrant dans la préparation du produit ;
- des moyens de dosage d'une quantité déterminée de pâtes correspondant à une unité de cuisson ;
- des moyens d'acheminement de cette dose ;
- une enceinte réceptrice de cette dose en vue de sa préparation et de son conditionnement physique ;
- une plaque de cuisson pourvue de moyens de chauffage apte à recevoir ladite dose de pâte en position étalée sur ladite plaque ;
- des moyens de temporisation propres à régler le temps et l'intensité du chauffage affectant ladite plaque lors de la phase de cuisson ;
- des moyens d'acheminement de la pâte en amont de ladite plaque et du produit alimentaire en aval de ladite plaque vers une zone de mise à la disposition du consommateur.

Selon une autre caractéristique le dispositif comporte en outre des moyens de programmation insérés dans une unité centrale et propres, à partir d'un signal de déclenchement, d'adresser une série de signaux de mise en action et d'arrêt aux différents relais commandant le fonctionnement de chacun des éléments opposant l'appareil.

De façon plus particulière l'enceinte de conditionnement des éléments composant la pâte comporte un agitateur à grande vitesse propre à entraîner une mise en suspension homogène et une émulsion des différents produits composant la pâte acheminée ultérieurement vers les moyens de cuisson.

Plus spécialement la source d'ingrédients destinée à composer la pâte entrant dans la composition du produit est constituée d'une part d'une pluralité de produits pulvérulents entrant dans la composition de la pâte chacun pour une proportion déterminée et d'une source d'eau alimentaire.

Chacun des produits pulvérulents peut être stocké dans une chambre spécifique et il est alors associé à un dispositif de dosage propre à acheminer le produit pulvérulent correspondant dans la quantité appropriée pour constituer une dose unitaire de pâte vers la chambre de conditionnement.

Mais selon une variante plus particulièrement avantageuse on peut prévoir que la source d'approvisionnement destinée à la confection de la pâte est constituée d'une réserve de poudre contenant l'ensemble des ingrédients sous forme déshydratée et destinée à la composition finale du produit après incorporation d'une phase liquide telle que de l'eau alimentaire et provenant d'une seconde réserve.

La source de liquide alimentaire telle que l'eau, lait ou analogue, est également associée à un dispositif de dosage propre à acheminer vers l'enceinte de conditionnement une quantité de liquide correspondant à la quantité de produits pulvérulents provenant de la réserve de produits solides de façon à aboutir, en fonction des proportions correctes, à la constitution d'une pâte correspondant à la recette du produit alimentaire souhaité.

Selon une autre caractéristique du dispositif la plaque de cuisson est constituée d'un rouleau monté rotatif et entraîné par des moyens de mise en rotation le rouleau comportant intérieurement des moyens de chauffage tels que des résistances électriques alimentées depuis une source d'alimentation extérieure.

Et le rouleau comporte avantageusement une empreinte en relief de forme appropriée propre à coopérer avec un dispositif de distribution de la pâte de telle façon que la pâte vienne se positionner sur ladite empreinte, le produit final ayant ainsi la forme et la géométrie de cette empreinte après cuisson.

Plus spécialement encore le rouleau de cuisson est alimenté à partir d'un réservoir en forme d'auge dans lequel le rouleau est partiellement immergé, le rouleau recevant une dose de pâte correspondant à l'unité de produit alimentaire à cuire, et le positionnement du rouleau étant tel que la quantité de pâte puisse se répandre et se répartir sur ledit rouleau, notamment sur l'empreinte en relief prévue sur ledit rouleau de façon à épuiser la dose de pâte introduite dans ledit réservoir.

Selon une autre caractéristique le réservoir est muni de moyens de nettoyage propres à assurer l'élimination de tout dépôt au film de pâte résiduelle après le prélèvement de la dose de pâte transférée sur le rouleau de cuisson.

Pareillement le rouleau de cuisson est associé à un dispositif de nettoyage tel qu'une lame racleuse propre à décoller de la surface du rouleau tout dépôt de pâte cuite ou non susceptible d'y séjourner après une utilisation antérieure.

Selon une forme plus spécifique de réalisation le réservoir en forme d'auge est monté pivotant selon un axe horizontal, parallèle à l'axe de rotation du rouleau ; et le réservoir est associé à des moyens de manoeuvre propres à assurer le déplacement du rouleau depuis sa position active dans laquelle il offre sa face concave pour la réception de la pâte, et une position inactive ou de nettoyage dans laquelle sa face concave est orientée vers le bas, en permettant ainsi la chute par gravité du liquide de nettoyage ainsi que des débris entraînés.

Et avantageusement le réservoir est associé à une pluralité de buses d'injection de liquide propre à diriger sur le fond du réservoir, amené dans sa position inclinée de nettoyage, concavité orientée vers le bas, des jets de liquide de nettoyage propres à décaper le fond du réservoir et à éliminer tout dépôt parasite.

D'autres caractéristiques et avantages de l'invention ressortiront de la description qui suit et qui est donnée en rapport avec une forme de réalisation préférentielle présentée à titre d'exemple non limitatif.

La figure 1 représente une vue en perspective d'un schéma de réalisation d'une machine selon l'invention et adaptée à la préparation automatique de produits tels que crêpe ou galette.

La figure 2 montre un détail de réalisation de l'ensemble rouleau de cuisson et réservoir d'alimentation dudit rouleau.

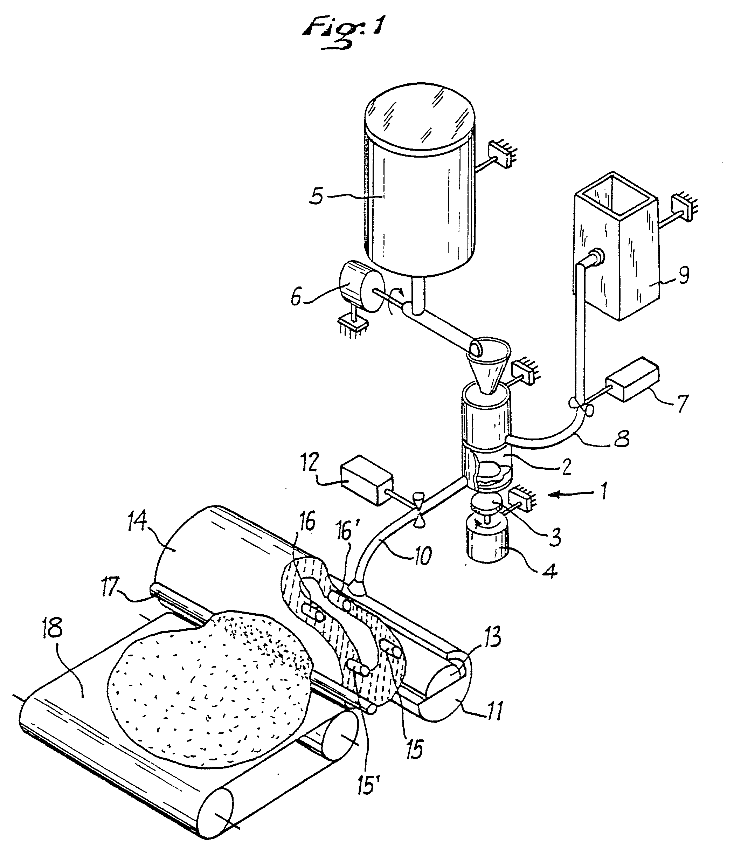

Selon la figure 1 on voit que l'appareil se compose dans sa partie centrale d'un ensemble de conditionnement 1 comportant une chambre 2 pour le conditionnement et la mise en forme de la pâte.

Cette chambre comporte à sa base les pales du rotor 3 formant un agitateur à grande vitesse 4.

Le dispositif de conditionnement et de travail de la pâte 1 est alimenté dans l'exemple ici illustré d'une part en produits solides et d'autre part en produits liquides.

La réserve de produits solides 5 est constituée d'une trémie d'alimentation dans laquelle sont stockés une composition pulvérulente formée d'un ensemble de produits déshydratés.

On utilisera avantageusement pour l'alimentation de l'appareil une composition solide déshydratée telle que connue dans l'art antérieur.

Cette composition permet de reconstituer avec incorporation d'un liquide alimentaire tel que l'eau une pâte ; le travail du rotor 3 amène cette pâte dans une condition d'homogénéité et éventuellement d'émulsification correspondant à la pâte préparée à partir des produits de base (lait, oeuf, farine, etc...).

A la base de la trémie 5 un dispositif de dosage motorisé 6 permet, à l'intérieur du cycle étudié ultérieurement, de débiter vers la chambre de conditionnement 2 la quantité de poudre déshydratée nécessaire et correspondant à une dose de pâte elle-même suffisante et nécessaire pour la confection d'une crêpe unitaire.

La chambre de dosage 2 est alimentée par ailleurs au moyen de l'électro-vanne 7 commandant le débit dans la conduite 8, d'une eau alimentaire par exemple stockée depuis la réserve 9 reliée elle-même à l'eau de la ville ou alimentée régulièrement.

On voit ainsi que il est possible d'obtenir rapidement et en quelques secondes dans la chambre 2, après arrivée successive des ingrédients solides et liquides, et travail du rotor 3, un ensemble pâteux correspondant rigoureusement à une pâte à crêpe (dans le cas de la confection de crêpes).

La chambre 2 est reliée par la conduite 10 au réservoir 11.

Le passage de la pâte depuis la chambre de conditionnement 2 vers le réservoir 11 peut se faire par gravité avec interposition d'un clapet de fermeture ou d'une électrovanne 12 ; le déclenchement de l'électrovanne commande le passage de la pâte en forme depuis la chambre de conditionnement 2 vers le réservoir 11.

Le réservoir 11 est en forme d'auge dont la concavité, en position de travail est orientée vers le haut et il reçoit un rouleau de transfert 13 dont la moitié inférieure est immergée à l'intérieur du réservoir 11.

Ce rouleau de transfert est au contact du rouleau de cuisson 14 ; le rouleau de cuisson 14 est lui-même entraîné en rotation et il comporte intérieurement dans des alésages longitudinaux les résistances de chauffage 15,15',16,16'.

Le contre-rouleau 13 ou rouleau de transfert reçoit ainsi la pâte recueillie depuis la réserve correspondant à l'espace interieur (concavité) du réservoir 11 et dépose cette quantité de pate sur le rouleau de cuisson 14 ; la rotation des deux rouleaux entraînant le report de la pâte depuis le rouleau de transfert 13 vers le rouleau de cuisson 14. La surface du rouleau de transfert est légèrement cannelée pour faciliter la "prise" de la pâte sur la surface du rouleau.

Le rouleau de cuisson comporte de préférence une empreinte, par exemple circulaire, apte à venir au contact préférentiel avec le rouleau de transfert 13 et à recevoir ainsi sur la zone correspondant à cette empreinte la quantité de pâte correspondant à une crêpe unitaire.

La vitesse de rotation du rouleau de cuisson 14 est calculée, de même que la puissance des résistances chauffantes 15,15',16,16' de façon à ce que pendant son temps de séjour sur le rouleau de cuisson, la dose de pâte déposée sur l'empreinte, subisse un cycle de cuisson déterminé et correspondant à la cuisson normale du produit.

Un dispositif racleur 17 disposé en avant du rouleau de cuisson 14, sensiblement en position diamétralement opposée par rapport à la génératrice de contact entre le rouleau de cuisson et le rouleau de transfert 13, assure la séparation de la partie de la crêpe qui arrive au contact de cette zone et la dépose de la crêpe, au fur et à mesure de la rotation du rouleau de cuisson 14 sur un ensemble d'évacuation.

Cet ensemble d'évacuations peut être constitué du tapis 18 lequel est entraîné de façon synchrone avec le rouleau de cuisson 14 ; et dans ces conditions la crêpe, au fur et à mesure qu'elle quitte le rouleau de cuisson 14, s'étale sur le tapis d'évacuation 18 pour aboutir à un dispositif de sortie où elle est mise à la disposition du consommateur.

L'ensemble réservoir 11 et rouleau de transfert 13 est monté basculant de façon à permettre à la face creuse ou concave du réservoir 11 d'être amené en position orientée vers le bas ; dans cette position le réservoir coopère avec une source puissante de jets de liquide de lavage assurant le décollement des dépôts notamment des restes de pâte ou de brisure de crêpe cuite qui pourraient subsister da façon à éliminer toute source de prolifération de germes.

L'ensemble des dispositifs électromécaniques intégré dans la machine sont commandés depuis une centrale qui assure la programmation des différentes opérations successives correspondant au cycle de fabrication d'une crêpe unitaire.

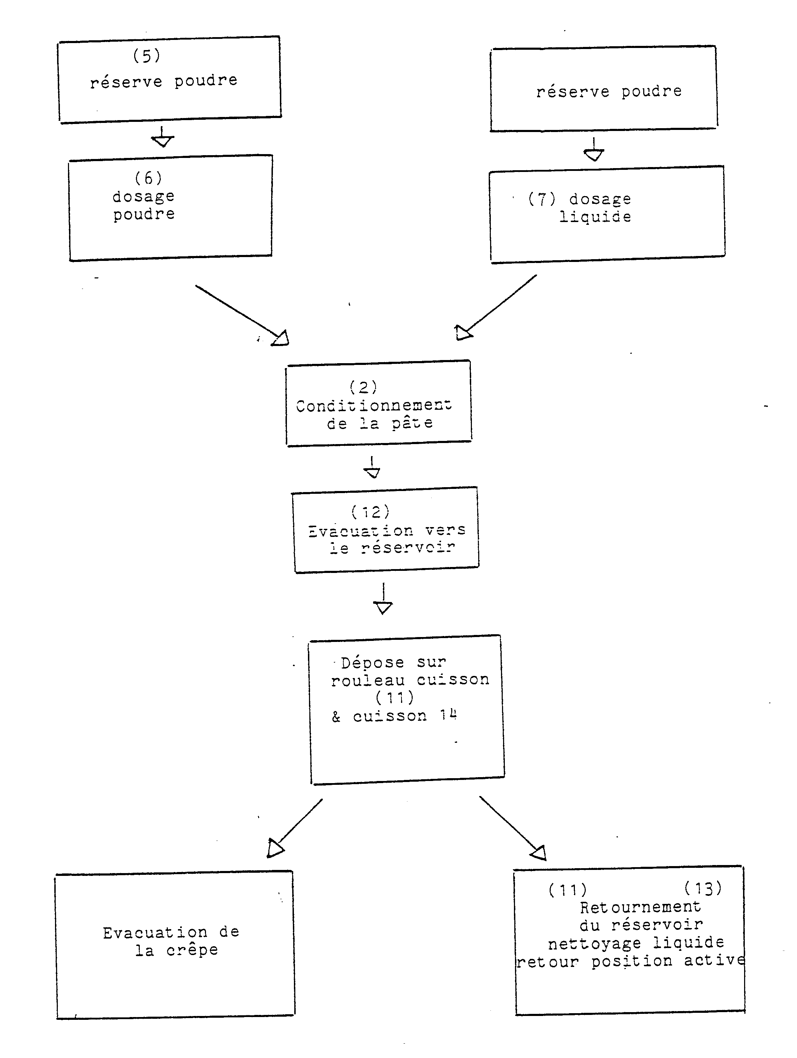

Ce cycle peut être illustré par le tableau donné en figure 3 ci-après et dans lequel les différentes fonctions sont exposées, le chiffre figurant entre parenthèses dans le cadre correspondant étant l'organe (électromécanique) mis en oeuvre et tel que illustré sur la figure 1.

On précisera que le cycle commandé depuis une centrale de programmation pourra comporter des variantes ou des modifications.

On pourra notamment prévoir à partir d'ingrédients stockés dans des chambres spécifiques, des variantes dans la composition de la pâte, correspondant à des variantes dans le choix du consommateur ou à des recettes éventuellement différentes.

De sorte que la machine pourra sur commande délivrer, au choix de l'utilisateur des produits alimentaires ayant une composition ou un parfum différent.

Chaque commande initiale peut être prévue pour déclencher un cycle particulier et homogène en fonction du cycle précis spécifique du produit à obtenir.

C'est ainsi que pour une recette ou une composition particulière le temps de conditionnement et d'émulsification dans la chambre 2 pourra être allongé ; de même que le cycle de mise en rotation du cylindre de cuisson 14 pourra être accéléré ou ralenti de façon à adapter le temps de cuisson du produit à sa composition spécifique.

Mais on pourra également prévoir que l'utilisateur ait à sa disposition un choix assez large permettant par exemple d'agir directement et sur la composition et sur des paramètres tels que la cuisson ; de sorte que le consommateur pourrait dans ces conditions commander un produit plus ou moins cuit, plus ou moins parfumé ou comportant un mélange de goûts etc...

Bien entendu on pourra également prévoir une complexification de l'appareil notamment en aval.

On pourrait ainsi prévoir que le dispositif d'évacuation 17 conserve une première crêpe en attente, sur laquelle serait délivré un produit alimentaire complémentaire salé ou sucré (confiture, tranche de jambon, etc...) sur lequel viendrait encore se superposer une crêpe ultérieure (commandée à l'intérieur d'un cycle comportant la cuisson de deux crêpes successives), le produit final délivré en aval du tapis 17 pouvant alors être un produit alimentaire complexe et comportant par exemple un véritable "sandwich" formé de deux crêpes avec interposition d'un aliment de complément.

Le dispositif de délivrance 18 pourra également être associé à un dispositif ou un ensemble de mise en sachet accompagné éventuellement d'un enroulement de la crêpe sur elle-même, là encore avec une possibilité d'incorporer un additif alimentaire.

L'ensemble de programmation pourra bien entendu comporter des systèmes de signalisation avertissant par exemple au moyen d'un signal sonore ou lumineux une défaillance ou encore une insuffisance, par exemple un défaut d'alimentation dans une réserve.

Avantageusement on peut prévoir une programmation plus fine de l'insertion de la phase de retournement et d'évacuation du réservoir ; dans le cas notamment où deux crêpes successives sont fabriquées l'une après l'autre, il n'apparaît pas nécessaire de procéder à un nettoyage systématique du réservoir après chaque crêpe, puisque le réservoir ne contient, lors de l'arrivée de la dose de pâte subséquente, qu'un film résiduel de la pâte antérieure qui n'a pas eu le temps de se détériorer.

Et dans ces conditions c'est seulement en cas d'interruption (pour un temps qu'il est facile de programmer) du cycle de fabrication que la séquence intermédiaire de retournement et de lavage peut se mettre en oeuvre.

Mais il sera avantageux cependant de prévoir systématiquement un lavage minimum, même dans le cas da fabrication continue, par exemple après la fabrication de six crêpes, dans ce cas un lavage systématique intervient après la sixième crêpe.

Avantageusement on pourra prévoir aux endroits appropriés des capteurs de positionnement (micro-contact ou interrupteur à lame souple) susceptibles de détecter le positionnement correct d'un organe avant de déclencher la phase ultérieure.

Ces capteurs pourront également être de type optique.

On peut ainsi vérifier le positionnement correct du réservoir de pâte et du rouleau de transfert correspondant avant de déclencher par l'ouverture de l'électrovanne 12 l'alimentation du réservoir depuis la chambre de conditionnement 2.

Pareillement l'arrivée de l'extrémité amont de la crêpe au niveau du tapis d'évacuation 15 peut être détectée par un système optique qui assure alors le déplacement du convoyeur 15 de façon synchrone pour assurer une évacuation correcte de la crêpe depuis le rouleau de cuisson 14.

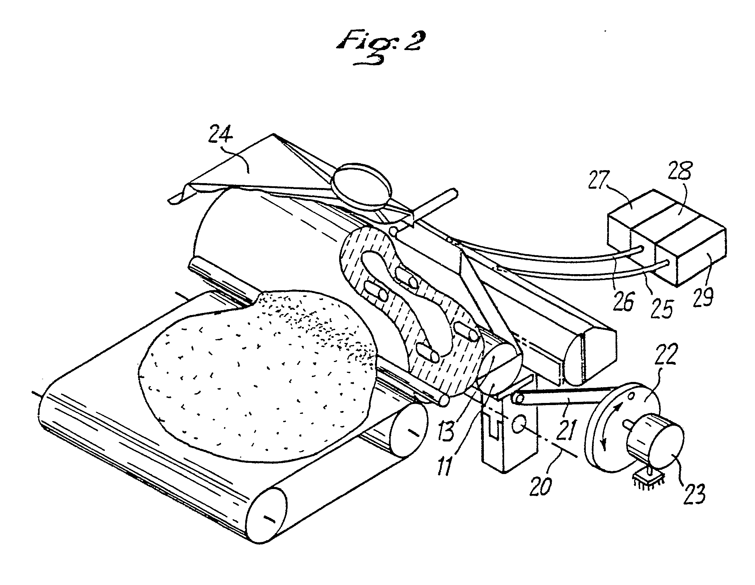

On voit notamment sur la figure 2 un exemple de réalisation d'un système de nettoyage du réservoir 11.

Le réservoir 11 et le rouleau 13 qui est immergé au sein de ce réservoir est monté pivotant selon l'axe 20 et le pivotement est commandé par la biellette 21 elle-même montée en position excentrée sur la roue 22 commandée par le moteur 23.

Le réservoir est surplombé par un carénage ou capotage 24 qui fait corps avec ledit réservoir 11 et auquel aboutissent les conduites souples 25,26 alimentées depuis la source d'eau alimentaire 9 avec interposition des électrovannes 27, 28,29.

Une motorisation permet éventuellement d'assurer une surpression de l'eau débitée par les conduites 26 et 25 de façon à assurer un jet d'une puissance intense lors de la phase de nettoyage.

On comprend que par le jeu de la biellette 21 l'ensemble réservoir 13 est retourné et les conduites 25,26 dirigent alors vers des buses (non représentées) situées à l'intérieur du carénage 24 un ou des jets puissant de nettoyage qui décapent complètement la surface du réservoir ainsi que du rouleau de transfert 13 en assurant un retour de ces organes à une parfaite condition de propreté.

En fin de cycle la biellette, actionnée par le moteur 23 ramène le réservoir 11 et le rouleau de transfert 13 dans la position active telle que représentée sur les figures 1 et 2.

**Revendications**

1 - Dispositif pour la préparation, la cuisson et la délivrance automatique et en temps réel d'un produit alimentaire façonné et préparé à partir d'une pâte soumise à cuisson rapide sur plaque, telle qu'une crêpe, galette, bliniss ou analogues, et le dispositif est caractérisé en ce qu'il comporte :
- une source (5) des ingrédients de base propres à constituer la pâte entrant dans la préparation du produit ;
- des moyens de dosage (6) d'une quantité déterminée de pâte correspondant à une unité de cuisson ;
- des moyens d'acheminement de cette dose ;
- une enceinte (2) réceptrice de cette dose en vue de sa préparation et de son conditionnement physique ;
- une plaque de cuisson (14) pourvue de moyens de chauffage (15,15') apte à recevoir ladite dose de pâte en position étalée sur ladite plaque ;
- des moyens de temporisation propres à régler le temps et l'intensité du chauffage affectant ladite plaque lors de la phase de cuisson ;
- des moyens d'acheminement (13-18) de la pâte en amont de ladite plaque et du produit alimentaire en aval de ladite plaque vers une zone de mise à la disposition du consommateur.

2 - Dispositif selon la revendication 1, caractérisé en ce qu'il comporte en outre des moyens de programmation insérés dans une unité centrale et propres, à partir d'un signal de déclenchement, à adresser une série de signaux de mise en action et d'arrêt aux différents relais commandant le fonctionnement de chacun des éléments composant l'appareil.

3 - Dispositif selon l'une des revendications 1 ou 2, caractérisé en ce que l'enceinte (2) de conditionnement des éléments composant la pâte comporte un agitateur constitué d'un rotor 3 à grande vitesse propre à entrainer une mise en suspension homogène et une émulsion des différents produits composant la pâte acheminée ultérieurement vers les moyens de cuisson.

4 - Dispositif selon l'une des revendications 1,2 ou 3, caractérisé en ce que la source d'ingrédients destinée à composer la pâte entrant dans la composition du produit est constituée d'une part d'une pluralité de produits pulvérulents entrant dans la composition de la pâte chacun pour une proportion déterminée et d'une source d'eau alimentaire.

5 - Dispositif selon la revendication 4, caractérisé en ce que chacun des produits pulvérulents est stocké dans une chambre spécifique et il est alors associé à un dispositif de dosage propre à acheminer le produit pulvérulent correspondant dans la quantité appropriée pour constituer une dose unitaire de pâte vers la chambre de conditionnement.

6 - Dispositif selon l'une des revendications 1,2 ou 3, caractérisé en ce que la source d'approvisionnement destinée à la confection de la pâte est constituée d'une réserve de poudre (5) contenant l'ensemble des ingrédients sous forme déshydratée et destinée à la composition finale du produit après incorporation d'une phase liquide telle que de l'eau alimentaire et provenant d'une seconde réserve.

7 - Dispositif selon l'une des revendications 1 à 6, caractérisé en ce que la source de liquide alimentaire telle que l'eau, lait ou analogue, est également associée à un dispositif (7) de dosage propre à acheminer vers l'enceinte de conditionnement (2) une quantité de liquide correspondant à la quantité de produits pulvérulents provenant de la réserve de produits solides de façon à aboutir, en fonction des proportions correctes, à la constitution d'une pâte correspondant à la recette du produit alimentaire souhaité.

8 - Dispositif selon l'une des revendications 1 à 7, caractérisé en ce que la plaque (14) de cuisson est constituée d'un rouleau monté rotatif et entraîné par des moyens de mise en rotation le rouleau comportant intérieurement des moyens de chauffage tels que des résistances électriques (15,15') alimentées depuis une source d'alimentation extérieure.

9 - Dispositif selon la revendication 8, caractérisé en ce que le rouleau (14) comporte avantageusement une empreinte en relief de forme appropriée propre à coopérer avec un dispositif de distribution (13) de la pâte de telle façon que la pâte vienne se positionner sur ladite empreinte, le produit final ayant ainsi la forme et la géométrie de cette empreinte après cuisson.

10 - Dispositif selon l'une des revendications 8 ou 9, caractérisé en ce que le rouleau de cuisson (14) est alimenté à partir d'un réservoir en forme d'auge (11) dans lequel le rouleau de distribution (13) est partiellement immergé, le rouleau (13) recevant une dose de pâte correspondant à l'unité de produit alimentaire à cuire, et le positionnement du rouleau est tel que la quantité de pâte puisse se répandre et se répartir sur ledit rouleau, notamment sur l'empreinte en relief prévue sur ledit rouleau de façon à épuiser la dose de pâte introduite dans ledit réservoir.

11 - Dispositif selon l'une des revendications 1 à 10, caractérisé en ce que le réservoir (11) est muni de moyens de nettoyage liquides propres à assurer l'élimination de tout dépôt au film de pâte résiduelle après le prélèvement de la dose de pâte transférée sur le rouleau de cuisson et le rouleau de transfert (11) est associé à un dispositif de nettoyage tel qu'une lame racleuse propre à décoller de la surface du rouleau tout dépôt de pâte cuite ou non susceptible d'y séjourner une utilisation antérieure.

12 - Dispositif selon l'une des revendications 1 à 11, caractérisé en ce que le réservoir (11) en forme d'auge et son rouleau associé (13) sont montés pivotants selon un axe horizontal, et le réservoir est associé à des moyens de manoeuvre propres à assurer le déplacement du rouleau depuis sa position active dans laquelle il offre sa face concave pour la réception de la pâte, et une position inactive ou de nettoyage dans laquelle sa face concave est orientée vers le bas, en permettant ainsi la chute par gravité du liquide de nettoyage ainsi que des débris entraînés et le réservoir est associé à une pluralité de buses d'injection de liquide propre à diriger sur le fond du réservoir, amené dans sa position inclinée de nettoyage, concavité orientée vers le bas, des jets de liquide de nettoyage propres à décaper le fond du réservoir et à éliminer tout dépôt parasite.

*Fig. 1*

EP 0 359 639 A1

Fig. 2

```
┌─────────────────────────┐          ┌─────────────────────────┐
│          (5)            │          │                         │
│    réserve poudre       │          │     réserve poudre      │
│                         │          │                         │
└─────────────────────────┘          └─────────────────────────┘
             │                                    │
             ▽                                    ▽
┌─────────────────────────┐          ┌─────────────────────────┐
│          (6)            │          │     (7) dosage          │
│        dosage           │          │       liquide           │
│        poudre           │          │                         │
└─────────────────────────┘          └─────────────────────────┘
              ╲                          ╱
               ╲                        ╱
                ▽                      ▽
              ┌─────────────────────────┐
              │          (2)            │
              │    Conditionnement      │
              │      de la pâte         │
              └─────────────────────────┘
                          │
                          ▽
              ┌─────────────────────────┐
              │         (12)            │
              │    Evacuation vers      │
              │      le réservoir       │
              └─────────────────────────┘
                          │
                          ▽
              ┌─────────────────────────┐
              │    Dépose sur           │
              │    rouleau cuisson      │
              │         (11)            │
              │    & cuisson 14         │
              └─────────────────────────┘
                  ╱                  ╲
                 ╱                    ╲
                ▽                      ▽
┌─────────────────────────┐   ┌─────────────────────────┐
│                         │   │   (11)          (13)    │
│    Evacuation de        │   │    Retournement         │
│      la crêpe           │   │     du réservoir        │
│                         │   │   nettoyage liquide     │
│                         │   │ retour position active  │
└─────────────────────────┘   └─────────────────────────┘
```

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 389 947 (UGARTE-MENDIA) <br> * En entier * <br> --- | 1-10 | A 21 B 5/02 |
| A | FR-A-2 173 433 (GIDECO) <br> * Revendication 1; figures 3,4 * <br> --- | 8-10 | |
| A | WO-A-8 702 866 (V. BIANCHI) <br> * Résumé; page 4, ligne 16 - page 5, ligne 2; figures 1-3 * <br> --- | 1-10 | |
| A | US-A-1 749 414 (C.O. CHRISTIANSON) <br> * Page 2, lignes 37-85; figures 1-6 * <br> --- | 1-7 | |
| A | EP-A-0 191 250 (K. ISHIDA et al.) <br> ----- | | |

DOMAINES TECHNIQUES
RECHERCHES (Int. Cl.5)

A 21 B

Le présent rapport a été établi pour toutes les revendications

| Lieu de la recherche | Date d'achèvement de la recherche | Examinateur |
|---|---|---|
| LA HAYE | 07-12-1989 | FRANKS N.M. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
............................................................................
& : membre de la même famille, document correspondant

EPO FORM 1503 03.82 (P0402)